(19) Europäisches Patentamt
European Patent Office
Office européen des brevets

(11) **EP 3 611 129 A1**

(12) **EUROPEAN PATENT APPLICATION**
published in accordance with Art. 153(4) EPC

(43) Date of publication:
**19.02.2020 Bulletin 2020/08**

(51) Int Cl.:
***B82B 3/00*** *(2006.01)*   ***C08K 13/02*** *(2006.01)*
***A01N 59/16*** *(2006.01)*

(21) Application number: **18763071.0**

(22) Date of filing: **05.03.2018**

(86) International application number:
**PCT/ES2018/070159**

(87) International publication number:
**WO 2018/162773 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.03.2017 ES 201730295**

(71) Applicant: **Ablaze 177, S.L.U.**
**12006 Castellon (ES)**

(72) Inventors:
• **BELTRAN AZNAR, Noelia**
  **12006 Castellon (ES)**
• **RAAD ALBACAR, Borja**
  **12006 Castellon (ES)**

(74) Representative: **Sanz-Bermell Martinez, Alejandro**
**Sanz Bermell Internacional**
**Jativa, 4**
**46002 Valencia (ES)**

(54) **STERILISING PRODUCT FOR TEXTILE PRODUCTS AND METHOD FOR OBTAINING SAID PRODUCT**

(57)   The invention relates to a sterilising product for textile products and to a method for obtaining said product, the product being formed by nanocompounds including nanoparticles of natural or synthetic clay, silver ions (Ag+) and organic modifiers for retaining the silver ions in the clay nanoparticles. The product incorporates as additives expander precursors, binding agents and/or functionalising agents. The production method comprises the steps of: reducing the particle size to less than 30 microns; classifying the particles; obtaining laminar nanoparticles in either liquid suspension or powder, or by means of subsequent drying; mixing the resulting powder with silver ions (Ag+); adding expander precursors, binding agents and functionalising agents to the laminar structures; and introducing the precursors and agents into the laminar nanoparticles.

EP 3 611 129 A1

## Description

The object of the present invention is a sterilising product with disinfectant properties for being applied, for example, to detergents, softeners for the textile washing of all types of natural and synthetic fibres, which incorporates in its composition silver ion particles, and which has aseptic and antimicrobial preserving-protecting properties for a minimum of seven days in the fabric after being washed, in any textile washing mode, manually or automatically with a washer, wash tunnel, centrifuge or any other fabric washing or treatment mode. It is applicable for textile products, such as garments or undergarments of a single use or of as many uses as allowed by the garment, and particularly conceived for an industrial use, being understood as such for use in laundry services in hospitals, senior centres, hotels, laboratories, and others, wherein the mass washing of garments, sheets, etc., is performed, but not excluding household use among its applications.

The invention also relates to a method for obtaining said product.

## Basis of the invention

While human beings have an immune system that protects against the accumulation of microorganisms, materials such as textiles can be readily colonised by a large amount of microbes, or they may even be decomposed by said microbes.

Textiles are carriers of microorganisms such as pathogenic bacteria and/or bacteria causing bad odours, as well as mould and fungi. Textiles contaminated with bacteria are one of the main causes of infections and irritations of the skin.

The side effects of a bacterial attack are clearly evident in many cases, such as in irritations of the skin, babies suffering from diaper rash, infections of the foot, etc. Individuals living in institutions are more prone to develop infections of the skin than people not confined to hospitals, homes for the elderly, and similar establishments.

The most common method for preventing the hazardous and unpleasant accumulation of bacteria in the textile fabrics has been disinfection by means of washing or dry washing. However, it could be found that although washing may be satisfactory to combat a species of bacteria, bacterial damage increases with each washing.

Additionally, harmful bacteria may be readily transferred from contaminated fabrics to non-contaminated fabrics during the washing process, since both of them have direct contact or contact through the washing medium (water or other substances). As a result, intensive efforts are being carried out, which have resulted in the development of new concepts, such as antibacterial applications in the field of textile finishing.

The term "antimicrobial" comprises a series of particular agents acting against specific forms of microorganisms, such as bactericides (antibacterial agents), fungicides (antifungal agents), insect-proof agents, moth-proof agents, herbicides, algaecides, agents against decomposition, and products combating dust microorganisms.

The main functions of the antimicrobial agents in the textile are:

- To prevent cross-infection of pathogenic microorganisms
- To control microbial infestation
- To stop metabolism in the microbes for the purpose of reducing their reproduction and the formation of odours
- To protect the textile products from stains, discolouring, and deterioration of quality

Antimicrobial agents can be considered and used as antimicrobial agents for textiles if they have the following characteristics:

- Stability. Stability is determined by resistance to the following agents:

  ○ Heat
  ○ Light
  ○ Ultraviolet radiation
  ○ Oxidising agents
  Very few chemical compounds have all these characteristics. The chemical compound must be stable both without being applied to the fabric and when it is applied to said fabric. Additionally, the stability thereof must be conserved for long storage times and also after the application thereof to the fabric;

- Efficacy. This is determined by the capacity to destroy the microbes that may damage the fabrics and the skin of people in contact with said fabrics;
- Minimum specific percentage. The antimicrobial compounds are required in a relatively small percentage by weight, such that the user can maintain a low-weight aggregate;

- Cost under reasonable limits.

## State of the art

The use of silver compounds with antimicrobial properties is known. CN 101062786 describes the use of Ag2W04 for use in sanitary fixtures. Glass and ceramic materials with silver incorporated as an antimicrobial agent are used, as can be seen in US2007172661.

Thus, although the use of silver ions as an antimicrobial agent is known, their use as an additive for the treatment of fabrics in washing or sterilising processes has not been described, nor has the manner in which said agent lasts over time in its application to a fabric as an external treatment been satisfactorily resolved.

Today, the products used in the laundering sector maintain basic chemical formulations which impede an aseptic, integral protection of the treated garments, which exceed four (4) hours (in the case of treating the garments with antibacterial resins) or seconds in case of conventional washing after completing their wash cycle and being exposed in the environment.

Additionally, as far as the applicant is aware, there has not been described any additive for compounds used for the treatment of textile products, such as detergents or softeners, which has an antimicrobial effect and maintains its antimicrobial activity for time periods of at least seven days.

The proposed invention consists of a sterilising product for textile products with disinfecting effects which solves the problems expressed above and allows a long-lasting effect, with said effect being increased with each use.

## Description of the invention

The invention relates to a sterilising product for textile products, and particularly to nanocompounds with antimicrobial properties due to its capacity for the fixing or controlled release of bioactive substances.

The nanocompounds of the invention are based on phyllosilicates and/or layered double hydroxides (natural or synthetic clays), to which silver ions or compounds which release silver ions ($Ag^+$) are incorporated in the preparation phase. These nanocompounds are intercalated with organic modifiers such that said modifiers enable said silver ions to be retained in the nanocompound.

The nanocompounds include thermosetting polymers, usually micropellets, among which, in a non-limiting manner, the following can be found:

- Epoxy resins
- Phenolic resins
- Unsaturated polyester resins
- Silicones
- Bakelite
- Melamine

The use of the nanocompounds provided with the corresponding modifiers indicated enables some of said nanocompounds to be fixed to the fibres, which are natural or synthetic, forming the fabrics, such that the release of the silver ions takes place slowly, which allows the product used to be effective for relative long periods of time.

The clay nanocompounds modified with the polymers are in the form of small delaminated or intercalated plates, with a tactoid structure of nanometric dimensions, wherein the clay is intercalated dispersed in a thermosetting polymer matrix.

The nanoclays are selected from the group consisting of:

- clays of the type such as montmorillonite
- kaolinite
- bentonite
- smectite
- hectorite
- sepiolite
- gibbsite
- dicktite
- nacritite
- saponite
- halloysite
- vermiculite

- mica

The compound can be formed by one of the clays from the indicated group, and/or by mixtures of said clays with one another, or mixtures of said clays with other phyllosilicates.

The clays may present a surface modification by means of the addition of additives to facilitate delamination and dispersion of the silver ions.

Preferably, the additives which are added comprise at least one or a combination of the following:

- Expander precursors
- Binding agents
- Functionalising agents

The expander precursors activate the nanocompounds by means of an initial increase of the basal spacing of the laminae, which modifies the surface characteristics of the clay.

The expander precursors are selected from the group consisting of one or a combination of two or more of the following:

- Dimethyl sulphoxide (DMSO)
- Polyethylene oxide
- Metal salts
- N-methyl formamide (NMF)
- Alcohols
- Acetates
- Hydrazine hydrate
- Water
- Anhydrous hydrazine
- Carboxymethyl starch
- Acetamide
- Starch
- DMSO+methanol (MeOH)
- Hydroxyethyl starch
- Hexanoic acid
- Hydroxypropyl starch
- Acrylamides
- Adonitol
- Glucose
- Archylamide
- Salicylic acid
- Caprolactam
- Glycolic acid
- Tannic acid
- Maleic acid
- Maleic anhydride
- Lactic acid
- Adipic acid
- Acetic acid
- Acetaldehyde
- Sorbitan
- Butyric acid
- Tetrafluoroethylene
- Chlorotrifluoroethylene
- Vinylpyrrolidone
- Hexamethylene
- Vinyl versatate
- Ethyl vinyl alcohol (EVOH), or derivatives thereof with molar contents of ethylene preferably less than 48 %, and more preferably less than 29 %.

These precursors are added to the sieved clays in an amount ranging from 0.01 to 98 %, preferably from 1 to 60 %.

When the organic material that is intercalated is EVOH (ethyl vinyl alcohol), it is taken to saturation in aqueous medium or in specific solvents of the type such as alcohol, or mixtures of alcohol and water. Particularly in a mixture of water and isopropanol, the proportions of water by volume are greater than 50 %.

The binding agents are polymers, cross-linkers and emulsifiers or surfactants.

They are selected as one or as a combination of two or more from the group consisting of:

- synthetic and natural polysaccharides (of plant or animal origin) such as cellulose and derivatives
- carrageenans and derivatives
- alginates
- dextran
- acacia gum
- chitosan or any of its natural or synthetic derivatives, such as

    ◦ chitosan salts
    ◦ chitosan acetate,

- derived proteins of plant or animal origin, such as

    ◦ corn proteins (zein)

- gluten derivatives, such as gluten or its gliadin and glutenin fractions, preferably gelatin, casein and soy proteins and derivatives thereof
- natural or synthetic polypeptides preferably of the elastin type obtained chemically or by genetic modification of microorganisms or plants
- lipids such as beeswax, carnauba wax, candelilla wax, shellac
- fatty acids
- monoglycerides
- and/or mixtures of all the foregoing.

The functionalising agents can be selected from the following:

- Kaolinite
- Silver nitrate
- Silver acetate
- Nickel chloride
- Cobalt chloride
- Copper nitrate

The preparation of the sterilising product of the invention for disinfection is performed as follows:

a) Reducing the clay particle size to an average size below 30 microns; the particle size reduction can be performed by mechanical grinding means;

b) Classifying the particles, selecting those of a size less than 25 microns (not less than 90 % under that value) and preferably those of a size less than 7 microns (not less than 90 % under that value). The classification can be performed by means of a vibrating sieve, a centrifuge, a press filter, and generally with any sieving means which enable the indicated values to be obtained;

c) Optionally, removing the organic matter by means of decanting techniques, supernatant collecting techniques or by chemical reaction; and/or washing with water or alcohols; and drying, for example, by evaporation in an oven, lyophilisation, centrifugation, gravimetric analyses in solution, turbo-dryers, or by atomisation.

e) Obtaining laminar nanoparticles in either liquid suspension or powder by means of subsequent drying by a wet or dry spinning process followed, or not, by an atomisation process with a controlled pressure drop or by means of any other industrial drying process, including lyophilisation

f) Mixing the resulting powder with silver ions ($Ag^+$)

g) Adding to the laminar structures in at least one step expander precursors mentioned above

h) introducing the expander precursors, binding agents and/or functionalising agents into the laminar nanoparticles. The process of introduction will preferably be accelerated by means of one or more of the following modifiers:

- increase in temperature,

- homogenisation under turbulent operating conditions,
- ultrasounds,
- application of supercritical fluids,
- deflocculant agents such as acrylates and/or phosphates,
- increase in pressure

In the case of the incorporation of metal salts, a complete or partial reduction thereof to their metal state or the mixing thereof with chemical methods may or may not be carried out.

The formulation is carried out in a non-limiting sense by means of sol-gel processes, chemical precipitation or hydrolysis by means of adding acids, bases, oxidising substances, reduction and subsequent partial oxidation, and hydrothermal precipitation or electrodeposition.

In particular, nanotechnology is applied during the manufacturing process in order to have a precise and homogeneous mixture of silver ions as an active agent perfectly distributed in the clay matrix. This mixture allows both the perfect distribution of the nanocompounds and, therefore, of its active ingredient in the material to be treated and the maximum efficacy of the bactericidal action of silver. When this state is reached, this mixture collapses and is atomised to convert it into the micrometric solid described above.

At the moment when it is integrated in the material to be treated and under certain circumstances, in the presence of humidity, the silver ions are displaced to the surface of the treated fabric, which is what gives the material its bactericidal capacity. This ionic displacement occurs in a controlled manner, and there are never free nanoparticles in the medium.

Mixing it with a softener which is applied in the final phase of washing has been considered, it is the best vehicle for adhering the product of the invention to the fabric. It has been found that the duration of the antimicrobial effect against the proliferation of viruses, pathogens, fungi and bacteria in the fabric is at least 7 days after washing.

The antimicrobial activity of the textiles is commonly evaluated using the standard protocol for textiles with antimicrobial activity, JIS L 1902 *(JIS stands for Japanese Industrial Standard),* which is equivalent to the international method, ISO 20743. It is a method of reference in the industry and is performed worldwide.

The laboratory where the tests are conducted is specialised in carrying out this method, and it offers to clients a service which is considered excellent.

This method seeks to simulate real conditions of the material. A value of R defines whether the product or the material is considered to possess antimicrobial properties.

Each sample is inoculated with about $1*10^5$ CFU (colony forming units) and incubated at 37 °C, 100 % RH for 24 hours.

The value of the antimicrobial activity of the samples tested by means of standard JIS L 1902 is determined by applying the following formula:

$$R=\log (B/C)$$

where B is the mean number of viable bacterial cells on the untreated sample after 24 h of incubation, and C is the mean number of viable bacterial cells on the sample treated with the antimicrobial agent after 24h of incubation.

When $R \geq 2.0$, the sample is considered to have biocidal properties.

In the application of the product of the invention, a process of washing contaminated garments caused by infection in a hospital was carried out. In particular, the test garments are towels (100 % cotton).

Five washing cycles were performed without adding chemical products for sterilisation, a rinse cycle was performed, and between 0.01 and 0.10 ml of the sterilising product of the invention were added, particularly added to a softener in the final rinse. The process is performed with cold water, and the analysis of the garments is performed.

After the analysis performed in the laboratory, the obtained result is the following:

Results: *Staphylococcus aureus*

| Batch | Description | cfu/ml 1 | cfu/ml 2 | cfu/ml 3 | Mean cfu/ml | dslncf | R | Reduction |
|---|---|---|---|---|---|---|---|---|
| C671/16121901 | Towel washed without the sterilising product of the invention | 4.00E+06 | 3.80E+06 | 9.00E+05 | 2.90E+06 | 0.37 | | |
| C671/16121902 | Towel in one washing cycle with the sterilising product of the invention | 9.02E+04 | 8.25E+04 | 7.26E+04 | 8.18E+04 | 0.05 | 1.55 | 97.18 % |
| C671/16121903 | Towel in five washing cycles with the sterilising product of the invention | 3.96E+03 | 3.85E+03 | 3.52E+03 | 3.78E+03 | 0.03 | 2.89 | 99.87 % |
| C671/16121901 | Towel washed without the sterilising product of the invention | 6.50E+06 | 6.80E+06 | 7.20E+06 | 6.83E+06 | 0.02 | | |
| C671/16121902 | Towel in one washing cycle with the sterilising product of the invention | 3.52E+04 | 9.68E+04 | 1.16E+05 | 8.25E+04 | 0.28 | 1.92 | 98.79 % |
| C671/16121903 | Towel in five washing cycles with the sterilising product of the invention | 2.30E+04 | 3.80E+04 | 3.50E+04 | 3.20E+04 | 0.12 | 2.33 | 99.53 % |

In view of the results, it is demonstrated that the treatment performed in the indicated material with the product of the invention not only increases the antimicrobial effect, but it also demonstrates that this effect is augmented depending on the number of washes performed.

The use of the disinfectant of the invention has a number of advantages in hospital, residential and hotel settings, such as:

- An increase in the protection of patients against infections
- A drop in hospital stays. Greater rotation and flow of patients
- Lower cost for purchasing antibiotics to fight infections
- Higher quality of care

Additionally, at the industrial or household laundering level, the following benefits are also obtained:

- Optimisation of costs in the acquisition of chemical products for industrial laundry services. This means that some chemical products, the functions of which are replaced by the disinfectant of the invention, are no longer used.
- Lower energy consumption, due to lower washing temperature.

It should be highlighted that the product of the invention has no impact on the environment and is absolutely harmless to human health. It does not contain nanoparticles, and specifically, the materials will be supplied as a powdery white solid with a mean particle size D50 of about 4.5 microns and with 100 % of the material above 0.5 microns, which is the size below which the nanoparticles are defined and identified.

**Claims**

1. A sterilising product for textile products with disinfectant properties, the product **characterised by** being formed by nanocompounds including:

    • Nanoparticles of natural or synthetic clay;
    • Silver ions ($Ag^+$); and
    • Organic modifiers for retaining said silver ions in the nanoparticles of clay.

2. The sterilising product for textile products according to claim 1, **characterised in that** the nanocompounds of the nanoparticles of clay modified by organic modifiers are in the form of delaminated or intercalated plates, with a tactoid structure of nanometric dimensions, wherein the clay is intercalated dispersed in a thermosetting polymer matrix.

3. The sterilising product for textile products according to any of claims 1 to 2, **characterised in that** the nanoparticles of clay are selected from the group consisting of:

    • clays of the type such as montmorillonite,
    • kaolinite
    • bentonite
    • smectite
    • hectorite
    • sepiolite
    • gibbsite
    • dicktite
    • nacritite
    • saponite
    • halloysite
    • vermiculite
    • mica
    • mixtures of at least two of the preceding clays
    • mixtures of at least one of the preceding clays with other phyllosilicates.

4. The sterilising product for textile products according to any of claims 1 to 3, **characterised in that** the organic modifiers are at least one of the following:

- Epoxy resins
- Phenolic resins
- Unsaturated polyester resins
- Silicones
- Bakelite
- Melamine.

5. The sterilising product for textile products according to any of claims 1 to 4, **characterised in that** it incorporates additives, with said additives being at least one or a combination of the following:

- Expander precursors
- Binding agents
- Functionalising agents.

6. The sterilising product for textile products according to claim 5, **characterised in that** the expander precursors are selected from the group consisting of one or a combination of two or more of the following:

- Dimethyl sulphoxide (DMSO)
- Polyethylene oxide
- Metal salts
- N-methyl formamide (NMF)
- Alcohols
- Acetates
- Hydrazine hydrate
- Water
- Anhydrous hydrazine
- Carboxymethyl starch
- Acetamide
- Starch
- DMSO+methanol (MeOH)
- Hydroxyethyl starch
- Hexanoic acid
- Hydroxypropyl starch
- Acrylamides
- Adonitol
- Glucose
- Archylamide
- Salicylic acid
- Caprolactam
- Glycolic acid
- Tannic acid
- Maleic acid
- Maleic anhydride
- Lactic acid
- Adipic acid
- Acetic acid
- Acetaldehyde
- Sorbitan
- Butyric acid
- Tetrafluoroethylene
- Chlorotrifluoroethylene
- Vinylpyrrolidone
- Hexamethylene
- Vinyl versatate
- Ethyl vinyl alcohol (EVOH), or derivatives thereof with molar contents of ethylene preferably less than 48 %, and more preferably less than 29 %.

7. The sterilising product for textile products according to any of claims 5 to 6, **characterised in that** the expander precursors are added to the sieved clays in an amount ranging from 0.01 to 98 %, preferably from 1 to 60 %.

8. The sterilising product for textile products according to any of claims 5 to 7, **characterised in that** the binding agents are polymers, cross-linkers and emulsifiers or surfactants.

9. The sterilising product for textile products according to claim 8, **characterised in that** the binding agents are selected as one or as a combination of two or more from the group consisting of:

> • Synthetic and natural polysaccharides (of plant or animal origin) such as cellulose and derivatives
> • Carrageenans and derivatives
> • Alginates
> • Dextran
> • Acacia gum
> • Chitosan or any of its natural or synthetic derivatives, such as
>
>> ◦ chitosan salts
>> ◦ chitosan acetate,
>
> • Derived proteins of plant or animal origin, such as
>
>> ◦ corn proteins (zein)
>
> • Gluten derivatives, such as gluten or its gliadin and glutenin fractions, preferably gelatin, casein and soy proteins and derivatives thereof
> • Natural or synthetic polypeptides preferably of the elastin type obtained chemically or by genetic modification of microorganisms or plants
> • Lipids such as beeswax, carnauba wax, candelilla wax, shellac
> • Fatty acids
> • Monoglycerides
> • and/or mixtures of all the foregoing.

10. The sterilising product for textile products according to claim 8, **characterised in that** the functionalising agents are selected as one or as a combination of two or more from the group consisting of:

> • Kaolinite
> • Silver nitrate
> • Silver acetate
> • Nickel chloride
> • Cobalt chloride
> • Copper nitrate.

11. The sterilising product for textile products according to any of claims 1 to 10, **characterised by** having the state of a powdery solid with a mean particle size D50 of about 4.5 microns and with 100 % of the material above 0.5 microns.

12. A method for obtaining the sterilising product for textile products of any of claims 1 to 11, **characterised in that** it comprises the steps of:

> • Reducing the clay particle size to an average size below 30 microns;
> • Classifying the particles, selecting those of a size less than 25 microns (not less than 90 % under that value) and preferably those of a size less than 7 microns (not less than 90 % under that value);
> • Obtaining laminar nanoparticles in either liquid suspension or powder by means of subsequent drying;
> • Mixing the resulting powder with silver ions ($Ag^+$);
> • Adding to the laminar structures in at least one step expander precursors, binding agents and functionalising agents;
> • Introducing the expander precursors, binding agents and/or functionalising agents into the laminar nanoparticles.

13. The method for obtaining the sterilising product for textile products according to claim 12, **characterised in that** it includes a step of removing the organic matter.

14. The method for obtaining the sterilising product for textile products according to any of claims 12 to 13, **characterised in that** when the organic material constituting the expander precursor that is intercalated is EVOH (ethyl vinyl alcohol), it is taken to saturation in aqueous medium or in specific solvents of the type such as alcohol, or mixtures of alcohol and water; particularly in a mixture of water and isopropanol, it is carried out in proportions of water by volume greater than 50 %.

15. The method for obtaining the sterilising product for textile products according to any of claims 12 to 14, **characterised in that** it further includes a step of washing with water, alcohols or a mixture of both; and subsequent drying.

16. The method for obtaining the sterilising product for textile products according to any of claims 12 to 15, **characterised in that** it further includes a step of accelerating the process of introduction by means of one or more of the following modifiers:

- increase in temperature;
- homogenisation under turbulent operating conditions;
- ultrasounds;
- application of supercritical fluids;
- deflocculant agents such as acrylates and/or phosphates;
- increase in pressure.

17. The method for obtaining the sterilising product for textile products according to any of claims 12 to 16, **characterised in that**, in the case of incorporating metal salts, there is further included a step of completely or partially reducing said metal salts to their metal state or the mixing thereof.

18. The method for obtaining the sterilising product for textile products according to any of claims 12 to 17, **characterised in that** it is carried out by means of sol-gel processes, chemical precipitation or hydrolysis by means of adding acids, bases, oxidising substances, reduction and subsequent partial oxidation, and hydrothermal precipitation or electrodeposition.

19. The method for obtaining the sterilising product for textile products according to any of claims 12 to 18, **characterised in that** it is carried out by means of sol-gel processes, chemical precipitation or hydrolysis by means of adding acids, bases, oxidising substances.

20. The method for obtaining the sterilising product for textile products according to any of claims 12 to 19, **characterised by** being incorporated into products for the treatment of textile products, Including detergents and/or softeners.

**Amended claims under Art. 19.1 PCT**

1. A sterilising product for textile products with disinfectant properties, the product **characterised by** being formed by nanocompounds including:

- Nanoparticles of natural or synthetic clay;
- Silver ions ($Ag^+$); and
- Organic modifiers for retaining said silver ions in the nanoparticles of clay.

2. The sterilising product for textile products according to claim 1, **characterised in that** the nanocompounds of the nanoparticles of clay modified by organic modifiers are in the form of delaminated or intercalated plates, with a tactoid structure of nanometric dimensions, wherein the clay is intercalated dispersed in a thermosetting polymer matrix.

3. The sterilising product for textile products according to any of claims 1 to 2, **characterised in that** the nanoparticles of clay are selected from the group consisting of:

- clays of the type such as montmorillonite,
- kaolinite

- bentonite
- smectite
- hectorite
- sepiolite
- gibbsite
- dicktite
- nacritite
- saponite
- halloysite
- vermiculite
- mica
- mixtures of at least two of the preceding clays
- mixtures of at least one of the preceding clays with other phyllosilicates.

4. The sterilising product for textile products according to any of claims 1 to 3, **characterised in that** the organic modifiers are at least one of the following:

- Epoxy resins
- Phenolic resins
- Unsaturated polyester resins
- Silicones
- Bakelite
- Melamine.

5. The sterilising product for textile products according to any of claims 1 to 4, **characterised in that** it incorporates additives, with said additives being at least one or a combination of the following:

- Expander precursors
- Binding agents
- Functionalising agents.

6. The sterilising product for textile products according to claim 5, **characterised in that** the expander precursors are selected from the group consisting of one or a combination of two or more of the following:

- Dimethyl sulphoxide (DMSO)
- Polyethylene oxide
- Metal salts
- N-methyl formamide (NMF)
- Alcohols
- Acetates
- Hydrazine hydrate
- Water
- Anhydrous hydrazine
- Carboxymethyl starch
- Acetamide
- Starch
- DMSO+methanol (MeOH)
- Hydroxyethyl starch
- Hexanoic acid
- Hydroxypropyl starch
- Acrylamides
- Adonitol
- Glucose
- Archylamide
- Salicylic acid
- Caprolactam
- Glycolic acid
- Tannic acid

• Maleic acid
• Maleic anhydride
• Lactic acid
• Adipic acid
• Acetic acid
• Acetaldehyde
• Sorbitan
• Butyric acid
• Tetrafluoroethylene
• Chlorotrifluoroethylene
• Vinylpyrrolidone
• Hexamethylene
• Vinyl versatate
• Ethyl vinyl alcohol (EVOH), or derivatives thereof with molar contents of ethylene preferably less than 48 %, and more preferably less than 29 %.

7. The sterilising product for textile products according to any of claims 5 to 6, **characterised in that** the expander precursors are added to the sieved clays in an amount ranging from 0.01 to 98 %, preferably from 1 to 60 %.

8. The sterilising product for textile products according to any of claims 5 to 7, **characterised in that** the binding agents are polymers, cross-linkers and emulsifiers or surfactants.

9. The sterilising product for textile products according to claim 8, **characterised in that** the binding agents are selected as one or as a combination of two or more from the group consisting of:

• Synthetic and natural polysaccharides (of plant or animal origin) such as cellulose and derivatives
• Carrageenans and derivatives
• Alginates
• Dextran
• Acacia gum
• Chitosan or any of its natural or synthetic derivatives, such as

  ◦ chitosan salts
  ◦ chitosan acetate,

• Derived proteins of plant or animal origin, such as

  ◦ corn proteins (zein)

• Gluten derivatives, such as gluten or its gliadin and glutenin fractions, preferably gelatin, casein and soy proteins and derivatives thereof
• Natural or synthetic polypeptides preferably of the elastin type obtained chemically or by genetic modification of microorganisms or plants
• Lipids such as beeswax, carnauba wax, candelilla wax, shellac
• Fatty acids
• Monoglycerides
• and/or mixtures of all the foregoing.

10. The sterilising product for textile products according to claim 8, **characterised in that** the functionalising agents are selected as one or as a combination of two or more from the group consisting of:

• Kaolinite
• Silver nitrate
• Silver acetate
• Nickel chloride
• Cobalt chloride
• Copper nitrate.

11. The sterilising product for textile products according to any of claims 1 to 10, **characterised by** having the state of a powdery solid with a mean particle size D50 of about 4.5 microns and with 100 % of the material above 0.5 microns.

12. A method for obtaining the sterilising product for textile products of any of claims 1 to 11, **characterised in that** it comprises the steps of:

   • Reducing the clay particle size to an average size below 30 microns;
   • Classifying the particles, selecting those of a size less than 25 microns (not less than 90 % under that value) and preferably those of a size less than 7 microns (not less than 90 % under that value);
   • Obtaining laminar nanoparticles in either liquid suspension or powder by means of subsequent drying;
   • Mixing the resulting powder with silver ions (Ag$^+$);
   • Adding to the laminar structures in at least one step expander precursors, binding agents and functionalising agents;
   • Introducing the expander precursors, binding agents and/or functionalising agents into the laminar nanoparticles.

13. The method for obtaining the sterilising product for textile products according to claim 12, **characterised in that** it includes a step of removing the organic matter.

14. The method for obtaining the sterilising product for textile products according to any of claims 12 to 13, **characterised in that** when the organic material constituting the expander precursor that is intercalated is EVOH (ethyl vinyl alcohol), it is taken to saturation in aqueous medium or in specific solvents of the type such as alcohol, or mixtures of alcohol and water; particularly in a mixture of water and isopropanol, it is carried out in proportions of water by volume greater than 50 %.

15. The method for obtaining the sterilising product for textile products according to any of claims 12 to 14, **characterised in that** it further includes a step of washing with water, alcohols or a mixture of both; and subsequent drying.

16. The method for obtaining the sterilising product for textile products according to any of claims 12 to 15, **characterised in that** it further includes a step of accelerating the process of introduction by means of one or more of the following modifiers:

   • increase in temperature;
   • homogenisation under turbulent operating conditions;
   • ultrasounds;
   • application of supercritical fluids;
   • deflocculant agents such as acrylates and/or phosphates;
   • increase in pressure.

17. The method for obtaining the sterilising product for textile products according to any of claims 12 to 16, **characterised in that**, in the case of incorporating metal salts, there is further included a step of completely or partially reducing said metal salts to their metal state or the mixing thereof.

18. The method for obtaining the sterilising product for textile products according to any of claims 12 to 17, **characterised in that** it is carried out by means of sol-gel processes, chemical precipitation or hydrolysis by means of adding acids, bases, oxidising substances, reduction and subsequent partial oxidation, and hydrothermal precipitation or electrodeposition.

19. The method for obtaining the sterilising product for textile products according to any of claims 12 to 18, **characterised in that** it is carried out by means of sol-gel processes, chemical precipitation or hydrolysis by means of adding acids, bases, oxidising substances.

20. The method for obtaining the sterilising product for textile products according to any of claims 12 to 19, **characterised by** being incorporated into products for the treatment of textile products, Including detergents and/or softeners.

# EP 3 611 129 A1

<table>
<tr><td rowspan="2">INTERNATIONAL SEARCH REPORT</td><td>International application No.</td></tr>
<tr><td>PCT/ES2018/070159</td></tr>
</table>

**A. CLASSIFICATION OF SUBJECT MATTER**

**See extra sheet**

According to International Patent Classification (IPC) or to both national classification and IPC

**B. FIELDS SEARCHED**

Minimum documentation searched (classification system followed by classification symbols)
B82B, C08K, A01N

Documentation searched other than minimum documentation to the extent that such documents are included in the fields searched

Electronic data base consulted during the international search (name of data base and, where practicable, search terms used)

EPODOC, INVENES, WPI, CAS, GOOGLE ACADEMICO

**C. DOCUMENTS CONSIDERED TO BE RELEVANT**

| Category* | Citation of document, with indication, where appropriate, of the relevant passages | Relevant to claim No. |
|---|---|---|
| X | KONWAR U. et al. Vegetable oil bases highly branched polyester/clay silver nanocomposites as antimicrobial surface coatings materials. Progress in organic coatings , 2010, Vol. 68, N° 4, Pages 265-273 [on line][retrieved the 04/04/2018]. abstract; introducción; paragraphs 2.1, 2.3, 2.4 and 3.1; table 1 | 1-20 |
| X | GIRASE et al. Silver-clay nanohybrid structure for effective and diffusion-controlled antimicrobial activity. Material science and engineering: C, 2011, Vol. 31, N° 8 [on line][retrieved the 04/04/2018]. abstract; introducción; paragraph 2.1, 2.2, 3.2 and 4; fig1; table 1 | 1-20 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 07/05/2018 | **(08/05/2018)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | M. Ojanguren Fernández Telephone No. 91 3498468 |

Form PCT/ISA/210 (second sheet) (January 2015)

## INTERNATIONAL SEARCH REPORT

| | International application No. |
|---|---|
| | PCT/ES2018/070159 |

| C (continuation). | DOCUMENTS CONSIDERED TO BE RELEVANT | |
|---|---|---|
| Category * | Citation of documents, with indication, where appropriate, of the relevant passages | Relevant to claim No. |
| X | JP H04194074 A (PAARU SUTEITSUKU KK) 14/07/1992, BASE DE DATOS WPI EN EPOQUE, N° of Access 1992-281878 | 1-20 |

Form PCT/ISA/210 (continuation of second sheet) (January 2015)

## INTERNATIONAL SEARCH REPORT

Information on patent family members

| International application No. |
| --- |
| PCT/ES2018/070159 |

| Patent document cited in the search report | Publication date | Patent family member(s) | Publication date |
| --- | --- | --- | --- |
| JPH04194074 A | 14.07.1992 | NONE | |

**INTERNATIONAL SEARCH REPORT**

| International application No. |
|---|
| PCT/ES2018/070159 |

**CLASSIFICATION OF SUBJECT MATTER**

*B82B3/00* (2006.01)
*C08K13/02* (2006.01)
*A01N59/16* (2006.01)

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101062786

- US 2007172661 A